# EUROPÄISCHE PATENTSCHRIFT

(11) **EP 2 864 752 B1**
(45) Veröffentlichungstag und Bekanntmachung des Hinweises auf die Patenterteilung: **02.11.2016**
(21) Anmeldenummer: 13731147.8
(22) Anmeldetag: 25.06.2013
(51) Int. Cl.: G01M 15/10, G01M 15/14

(54) **SYSTEM FÜR DIE MESSUNG VON PARTIKELEMISSIONEN AN FLUGZEUGTRIEBWERKEN IN PRÜFSTÄNDEN**
SYSTEM FOR MEASURING PARTICLE EMISSIONS OF AIRCRAFT ENGINES ON TEST BEDS
SYSTÈME POUR MESURER DES ÉMISSIONS DE PARTICULES SUR DES PROPULSEURS D'AÉRONEFS DANS DES BANCS D'ESSAI

(30) Priorität: 25.06.2012 DE 102012105535; 13.07.2012 DE 102012106320
(43) Veröffentlichungstag der Anmeldung: 29.04.2015
(73) Patentinhaber: AVL List GmbH, 8020 Graz (AT)
(72) Erfinder: RINDLISBACHER, Theo, CH-3645 Gwatt (CH)
(74) Vertreter: Patentanwälte Pinter & Weiss OG
(86) Internationale Anmeldenummer: PCT/EP2013/063285
(87) Internationale Veröffentlichungsnummer: WO 2014/001338

(56) Entgegenhaltungen:
- AT-U2- 11 333
- US-A1- 2012 073 436

## Beschreibung

### Beschreibung der Erfindung

Flugzeugtriebwerke (Gasturbinen) werden heute gemäß dem internationalen Standard der internationalen Zivilluftfahrtorganisation (ICAO) mit einer Typenprüfung auf die Einhaltung von Grenzwerten bezüglich der Schadstoffe NOx, HC, CO und der Rauchzahl geprüft. Diese Emissionszertifizierung ist im Regelwerk Anhang 16, Band II der Internationalen Zivilluftfahrtorganisation ICAO 15 beschrieben. Bezüglich Partikelemissionen (Ultra-Feinstaub) gibt es weder ein standardisiertes Messverfahren noch einen Standard. International werden nun Anstrengungen zur Einführung einer Zertifizierungsvorschrift für Partikelemissionen unternommen.

Beispielsweise zeigt die AT 11 333 U2 ein Verfahren zur Messung der Partikelemission von Verbrennungsmotoren. Dabei wird ein Abgas-Teilstroms mit gefilterter Umgebungsluft verdünnt.

Mit dem vorliegenden Prototypen und seiner technischen Umsetzung wird eine Möglichkeit geschaffen, gleichzeitig zur Abgasmessung mit einem verlustoptimierten und standdardisierten System Partikelmessungen durchzuführen (Partikelmasse, -anzahl und - größenverteilung).

Das System für die Messung von Partikelemissionen an Flugzeugtriebwerken in Prüfständen umfasst somit zum einen das Verfahren zur Messung der Partikelemissionen als auch die Vorrichtung, die dafür geeignet ist, um das entsprechende Verfahren durchzuführen. Im Nachfolgenden wird der Einfachheit halber von System gesprochen, wobei unter dem Begriff System sowohl das Verfahren als auch die damit verbundene Vorrichtung zu verstehen ist.

### Anwendungsgebiet

Zukünftige Partikelmessungen an Flugzeugtriebwerken in Prüfständen. Standardisierung von Systemen und Messverfahren. Einführung einer Feinstaubzertifizierung für Flugzeugtriebwerke.

### Problemstellung

Die Dimensionen von Flugzeugtriebwerken und deren Kraftentfaltung erfordern eine räumliche Trennung der Instrumentierung vom Triebwerk. Dadurch ergeben sich sehr lange Leitungen mit entsprechend hohen Partikelverlusten. Ein wesentlicher Punkt zur Reduktion von Leitungsverlusten ist die Verweilzeit der Abgase in den Leitungen. Dazu müssten der Leitungsinnendurchmesser und die Flussrate ausbalanciert werden. Für Par tikelmessungen würde eine "in-line" Pumpe zu enormen und nicht kontrollierbaren Verlusten führen. Der vorliegende Prototyp erzeugt eine hohe konstante Flussrate, ohne "in-line" Pumpe und ohne dass der Druckabfall für die Instrumente zu groß wird.

Das wird durch die Merkmale der Ansprüche 1 und 7 realisiert, insbesondere durch eine Vorrichtung mit einem ersten Stromteiler, dessen Eingang mit einer Sonde zur Entnahme von Abgas des Flugzeugtriebwerkes verbunden ist und der den Abgasstrom in eine Partikelleitung und in eine mit einem Abblasventil verbundene Leitung aufteilt und vor dem Eingang des ersten Stromteilers ein Drucksensor vorgesehen ist, mittels dem ein vorgegebener Überdrucks vor dem ersten Stromteiler eingestellt wird, wobei die Partikelleitung vom ersten Stromteiler mit dem Eingang einer ersten Verdünnungsstufe verbunden ist, in der das Abgas in einem bestimmten Verhältnis verdünnt wird, der Ausgang der ersten Verdünnungsstufe mit dem Eingang eines zweiten Stromteilers verbunden ist und an der ersten Verdünnungsstufe ein Auspuff mit einem Ventil vorgesehen ist und wobei ein Ausgang des zweiten Stromteilers mit einem Instrument zur Partikelmessung verbunden ist und ein anderer Ausgang des zweiten Stromteilers mit einer Pumpe zur Einstellung eines vorgegebenen Durchflusses durch die Partikelleitung verbunden ist

In der Messleitung zu den Instrumenten muss eine konstante Flussrate aufrecht erhalten werden, um die Robustheit von Partikelmessungen zu erhöhen, unabhängig von einer gewissen Anzahl angehängter Instrumente. Der vorliegende Prototyp verwendet nun als Neuerung neben einem "Mass Flow Controller" zwei entsprechend platzierte Drucksensoren zur Überwachung eines konstanten Druckabfalls in einer auf 60°C temperierten Transportleitung. Zur gleichzeitigen Messung von Schadstoffen und Partikelemissionen muss der Abgasfluss nach der Entnahmesonde aufgeteilt werden. Weil am Punkt der Aufteilung bei höherer Triebwerksleistung noch Staudruck vom Triebwerk abgeblasen werden muss, ist ein Stromteiler ("flow splitter") erforderlich, welcher den Fluss bei möglichst geringen Partikelverlusten in drei Leitungen aufteilt. Ein zweiter identischer " flow splitter" wird zur Aufteilung des Partikelstroms für Masse-, Anzahl- und Größenmessung, sowie für die Erzeugung der bereits erwähnten konstanten Flussrate benötigt. Ein solches "flow splitter" Teil, welches den Anforderungen genügt, konnte im Handel nicht gefunden werden. Es wird im Beschrieb spezifiziert und ist integraler Bestandteil des Systems.

Der Eingangsdruck an der ersten Verdünnungsstufe für die Partikelleitung muss möglichst konstant gehalten werden. Stand der Technik ist die Handregelung eines Abblasventils. Im vorliegenden Prototypen wurde diese Regelung automatisiert. Die Temperierung der Messleitungen und deren Komponenten ist zur Minimierung von Partikelverlusten sehr wichtig und wurde durch Forschungstätigkeit ermittelt. Nach heutigem Stand werden einzelne Leitungskomponenten (Ventile, Splitter, T-Stücke) in eine heizbare Box eingebaut. Weil die Komponenten meist aus Chromstahllegierungen mit schlechter Wärmeleitfähigkeit bestehen, dauert es viele Stunden, bis die in Boxen eingebauten Teile gleichmäßig durchgewärmt sind. Für die vorliegenden Prototypen wurden Systemteile in offene Käfige gebaut, dafür spezielle thermostatische Heizkissen entwickelt, welche die Komponenten direkt umschließen und ein Aufheizen auf Betriebstemperatur innerhalb einer Stunde ermöglichen.

Weitere erfindungsgemäße Merkmale und Vorteile der Erfindung ergeben sich aus den Ansprüchen und der nachfolgenden Beschreibung.

### Beschreibung und Ausführungsbeispiel der Erfindung

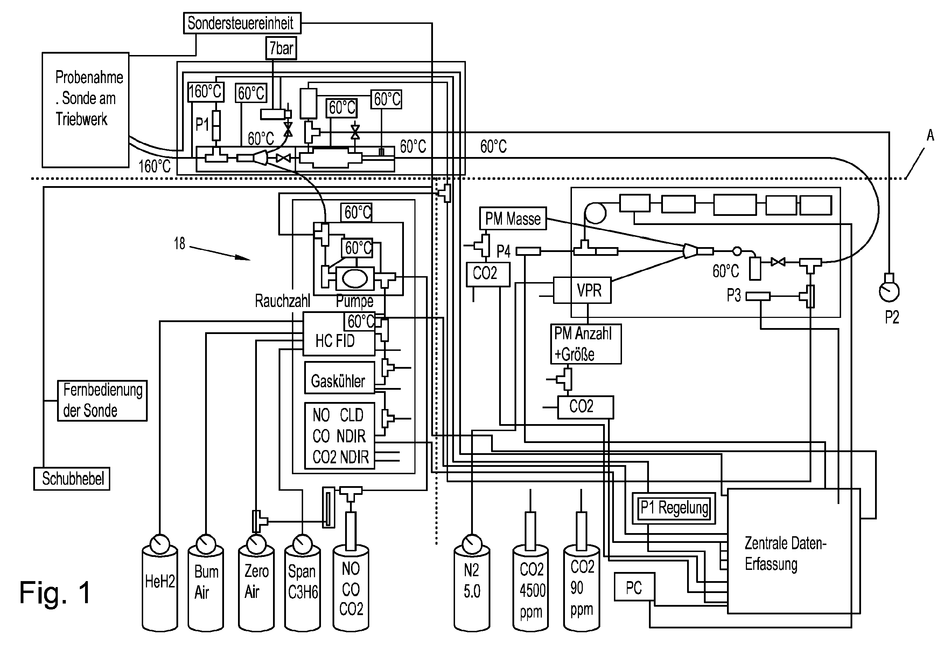

In Figur 1 ist das Gesamtsystem dargestellt, inklusive einer Entnahmesonde beim Triebwerk und der Gasanalyse. Das Gesamtsystem umfasst ein Verfahren, das geeignet ist, Partikelemissionen an Flugzeugtriebwerken in Prüfständen zu messen. Alle Teile, welche oberhalb der schwarz gepunkteten Linie A eingezeichnet sind, befinden sich in der realen Ausführung innerhalb der Triebwerkstestzelle. Teile unterhalb dieser Linie A befinden sich in einem vom Triebwerk getrennten Nebenraum. Links unten in der Figur 1 sind die Teile für die Gasanalyse (Schadstoffanalyse 18) zu sehen, rechts die restlichen Teile für die Partikelmessung.

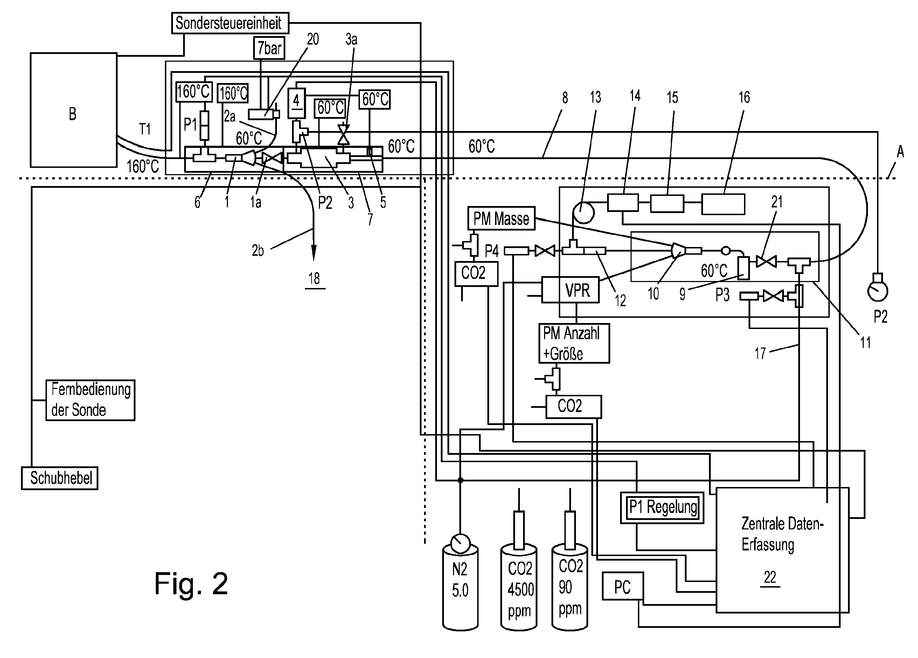

Das Gesamtsystem umfasst ein Verfahren, das geeignet ist, Partikelemissionen an Flugzeugtriebwerken in Prüfständen zu messen. Figur 2 zeigt die im Rahmen des Patentantrags beschriebenen Teile für die Ergänzung des bestehenden ICAO Abgasmess-Systems durch die Partikelmessung. Alle Einzelteile mit Ausnahme der Stromteiler ("flow splitter") 1, 10 und der Heizkissen waren zum Zeitpunkt der Ausführung ab Lager im Handel erhältlich. Das ganze Leitungssystem für die Partikelmessung wurde auf einen Innendurchmesser von mindestens 8.0 mm spezifiziert und wo nichts anderes steht, werden Chromstahllegierungen verwendet. Bei der Auswahl von Leitungskomponenten und Verbindungen wurde auf stufenfreie Übergänge geachtet.

Im Folgenden beziehen sich alle Nummern der Beschreibung auf die Zeichnung in Figur 2.

Die Abgase und die Partikel aus dem Flugzeugtriebwerk gelangen durch eine nach ICAO Anhang 16, Band 2 spezifizierte Entnahmesonde B innerhalb von maximal 3 Sekunden und bei einer Leitungslänge von vorzugsweise nicht mehr als 8m zum ersten Stromteiler 1. Die Abgase werden unterwegs auf eine Temperatur von 160°C stabilisiert. Die erste "flow splitter" Einheit 1 ist ebenfalls durch ein Heizkissen 6, welches die Teile exakt umfasst, auf 160°C geregelt.

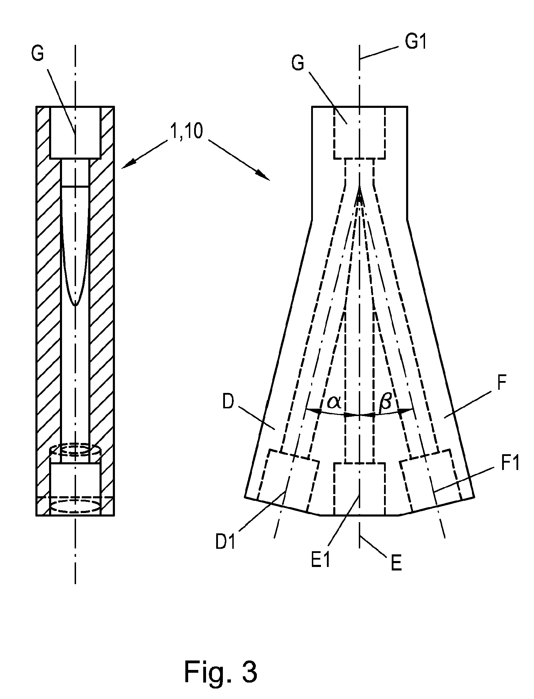

Am Stromteiler 1 teilt sich der Abgasstrom in die nach unten verlaufende Abgasleitung 2b für die Schadstoffanalyse 18 (die nicht Gegenstand der Erfindung ist), in die geradlinig verlaufende Partikelleitung 8 für die Partikelmessung und in die nach oben verlaufende Leitung 2a zum Abblasen des Überdrucks 2, welcher durch den Staudruck an der Abgassonde beim Hochfahren des Triebwerks entsteht. Die Bohrungen im ersten "flow splitter" 1 weisen wie das Leitungssystem einen Innendurchmesser von 8.0mm auf. Die Spezifikationen und die Konstruktion des Stromteiler 1 sind in Figur 3 zusammengestellt.

Der Stromteiler 1 teilt das über den Eingangsabschnitt G zugeführte Probengas in drei Teile, die über die Ausgangsabschnitte D, E, F abgeführt werden. Der mittlere Ausgangsabschnitt E verläuft fluchtend mit dem Eingangsabschnitt G, bzw. fällt die Längsachse G1 des Eingangsabschnitts G mit der Längsachse E1 des mittleren Ausgangsabschnitts E zusammen. Die Längsachsen D1, F1 des oberen D und unteren Ausgangsabschnitts F schließen mit der Längsachse E1 des mittleren Ausgangsabschnitts E jeweils einen oberen α und einen unteren Abschnittswinkel β ein, die im dargestellten Ausführungsbeispiel absolut z.B. je 14° betragen. Der Durchmesser der einzelnen Abschnitte ist mit 8mm gewählt.

Vor dem ersten "flow splitter" 1 befindet sich ein luftgekühlter Drucksensor P1 mit einem Messbereich von Vakuum bis plus 1.5 bar relativ zur Umgebungsluft. Vor dem ersten Stromteiler 1 soll der Druck auf +0.02bar über Umgebungsdruck stabilisiert werden. Diese Druckstabilisierung ist nötig, damit die erste Verdünnungsstufe 3, welche in der Partikelleitung 8 nach dem ersten Stromteiler 1 sitzt, mit möglichst konstanter Verdünnung arbeitet. Bei der ersten Verdünnungsstufe 3 handelt es sich um einen "ejector dilutor", in welchem mit einem Betriebsdruck von 2bar (gemessen über Drucksensor bzw. Manometer P2) partikelfreier Stickstoff über eine kritische Düse eingeblasen wird. Neben der Verdünnungsfunktion erzeugt der "ejector dilutor" einen kleinen Unterdruck, mit welchem bei Umgebungsdruck rund 4 Liter pro Minute gepumpt werden können. Der "ejector dilutor" ist deshalb Pumpe und Verdünnungsstufe in einem. Die existierende Abgasmessung 18 zieht über eine "in-line" Pumpe (siehe Fig.1) rund 16 Liter pro Minute. Zusammen mit dem "ejector dilutor" im ersten Verdünner 3 beträgt der Abgasfluss vor dem ersten "flow splitter" 1 rund 20 Liter pro Minute. Gängige und ICAO Anhang 16 konforme Abgassonden können dieses Volumen im Triebwerks-Leerlauf bei 7% Schub knapp liefern. Bei Steigerung des Triebwerksschubs geht dann das Abblasventil 20 mehr und mehr auf, um den Eingangsdruck am Stromteiler 1 auf +0.02bar über Umgebungsdruck zu halten. Das Abblasventil 20 arbeitet pneumatisch mit einem Betriebsdruck von 7 bar. Es wird durch einen eigenen Regelkreis über den Drucksensor P1 gesteuert. Die Dimensionierung des Abblasventils 02 stellt einen Kompromiss zwischen der Fähigkeit dar, bei Vollschub von Triebwerken genügend überzähliges Abgasvolumen abzublasen und trotzdem genügend fein und konstant auf + 0.02 bar einzuregulieren.

Im "ejector dilutor" wird das Abgas mit partikelfreiem Stickstoff ungefähr im Verhältnis 8 bis 10:1 verdünnt. Die Verdünnung ist ein wesentliches Element zur Eindämmung von Partikelverlusten über die lange Leitung von dort bis zu den Instrumenten zur Partikelmessung. Sie ermöglicht es auch, praktisch ohne Verluste auf ein tieferes Temperaturniveau zu gelangen, nämlich von 160°C auf 60 °C Abgastemperatur. Dazu wird der zugeführte Stickstoff in einem Vorheizer 4 entsprechend vorgeheizt. Der Vorheizer 4 kann auch einen HEPA-Filter zur Filterung des zugeführten Gases (hier Stickstoff, möglich sind auch Luft bzw. reines CO₂-Gas) umfassen. Die Vorheiztemperatur wird über einen Temperatursensor 5 geregelt, so dass am Ausgang der Verdünnungsstufe (bei 5) 60 °C erreicht werden. Damit erfolgt der Übergang in die Partikelleitung 8, welche ebenfalls auf 60 °C geregelt ist, ohne Temperatursprung, was für die Minimierung von Partikelverlusten wichtig ist. Die Verdünnungsrate von rund 8 bis 10:1 verhindert zudem Rekondensation von Wasserdampf im transportierten Abgas bei 60°C. Der "ejector dilutor" selber wird ebenfalls mit einem Heizkissen 7 auf 60 °C gehalten. An seinem Auspuff befindet sich ein Ventil 3a. Dieses Ventil 3a ist normalerweise offen. Es kann zum Rückspülen der Partikelleitung 8 und der Verdünnungsstufe 3 geschlossen werden. Der Betriebsdruck der Verdünnungsstufe 3 (Einblasdruck der Verdünnungsluft, P2) beträgt wie bereits erwähnt normalerweise 2.0 bar und wird mit einem Manometer überwacht P2.

Zwischen erstem Stromteiler 1 und Verdünnungsstufe 3 befindet sich ein fettfreies Kugelventil 1a mit einem inneren Stufenübergang von maximal 0.2mm gegenüber dem geforderten Innendurchmesser von 8.0mm, welcher für das ganze Partikelleitungssystem spezifiziert ist. Das Ventil 1a wird gebraucht, um das Partikelsystem abtrennen zu können, wenn das Gassystem 18 auf Leckagen geprüft werden muss. Weiter kann dieses Ventil 1a vor Messungen geschlossen werden, um mit den Feinstaubinstrumenten über die Öffnung 3a die Partikelkonzentrationen der Umgebungsluft zu messen (bei ausgeschalteter Verdünnungsluft) und um eine Nullmessung zu machen, indem die partikelfreie Verdünnungsluft am "ejector dilutor" eingeschaltet wird und die Instrumente dann von der "NullLuft" ziehen. Für die Messung von Triebwerksabgas bzw. -partikel wird dann das Ventil 1 a bei eingeschalteter Verdünnungsluft geöffnet.

Die Partikel gelangen über eine vorzugsweise 12m lange, aus karbonisiertem Teflon gefertigte und auf 60 °C stabilisierte Partikelleitung 8 zum Abscheider 9 für größere Partikel (Cyclone). Der Cyclone 9 soll bei einem Fluss von 25 Liter pro Minute Partikel mit einem Mobilitätsdurchmesser >1 Mikrometer abscheiden. Dadurch wird verhindert, dass die Messung der Partikelmasse aus dem Triebwerk durch einzelne, von Zeit zu Zeit in der Partikelleitung 8 los gerissene agglomerierte Stücke gestört wird. (Triebwerke stoßen keine Partikel in der Größenordnung von Mikrometern aus, sondern viel kleinere)

Vor dem Cyclone 9 befindet sich ein weiteres fettfreies Kugelventil 21 mit möglichst stufenfreiem innerem Übergang von maximal 0.2mm. Es kann geschlossen werden, um die Partikelleitung 8 via Anschluss 17 mit partikelfreier Luft zurück zu spülen.

Die Partikel gelangen nach dem Cyclone 9 in einen weiteren, zweiten Stromteiler ("flow splitter") 10, welcher identisch zum ersten "flow splitter" gebaut ist. Der zweite "flow splitter" 10 teilt den Partikelstrom symmetrisch in eine Leitung für die Messung der Partikelmassekonzentration und die Messung der Partikelanzahlkonzentration bzw. -größenverteilung. "VPR" bezeichnet "volatile particle remover", eine Einrichtung zur Unterdrückung flüchtiger Partikel. Flüchtige Partikel sollen nicht mit gemessen werden. Sowohl der VPR wie die Instrumentierung sind nicht Gegenstand der beschriebenen Erfindung.

Die mittlere Leitung des zweiten Stromteiler 10 dient dazu, in der Partikelleitung 8 einen konstanten hohen Fluss zu erzielen. Spezifiziert ist eine maximale Verweilzeit von 7 Sekunden, von der Probennahme bis zum Cyclone 9. Dazu wird mit einer Pumpe 16 mit einer maximalen Förderleistung von 20 Litern pro Minute gezogen. Wie früher ausgeführt wurde, darf eine Pumpe 16 bei Partikelmessungen nicht in die eigentliche Partikelleitung 8 eingebaut werden, weil sehr viele Partikel darin hängen bleiben würden. Da die Flüsse der Instrumente selber nicht erhöht werden können, bleibt nur die Variante, vor den Instrumenten parallel mit einer Pumpe 16 zu ziehen. Wird vor den Messinstrumenten gezogen, führt dies normalerweise dazu, dass die Pumpe 16 nicht nur an der Partikelleitung 8 zieht, sondern auch Abgas der Instrumentenleitungen zurückziehen kann, welches in die Messinstrumente gelangen sollte.

Der Trick, damit dies nicht geschieht, ist nun folgender: Der "ejector dilutor" im Verdünner 3 kann auf Grund seiner Konstruktion an seinem Auslass rund 40 Liter pro Minute verdünntes Abgas liefern (am Eingang zieht er rund 4 Liter pro Minute, Verdünnung rund 10:1 --> 40 Liter pro Minute). Weil die 40 Liter pro Minute gegenüber Umgebungsdruck zur Verfügung stehen, kann mit der Pumpe 16 und den Instrumenten zusammen fast ohne Druckabfall ein entsprechend hohes Volumen gezogen werden. Mit Sicherheitsmarge wird ein totaler Fluss durch den zweiten Stromteiler 10 von 25 Liter pro Minute spezifiziert. Das überzählige Volumen des "ejector dilutors" entweicht im Verdünner 3 durch dessen Auspuff über Ventil 3a. Der Druckabfall durch den Pumpenbetrieb wird vor dem Cyclone 9 mittels Drucksensor P3 und vor der Pumpe mit P4 gemessen. Der Messbereich dieser Drucksensoren beträgt -300 bis +300mbar gegen Umgebungsdruck. Im Systembetrieb betragen P3 rund -20mbar und der Tiefstwert von P4 rund -50mbar. Die Überwachung von P3 dient dazu, den konstanten Fluss durch die Leitung 8 zu überwachen. Unabhängig von der Anzahl angehängter Instrumente und von der Triebwerksleitung muss dieser Wert immer gleich sein (entsprechend einem totalen Fluss von 25 Liter pro Minute bei 60°C). Der Wert von P4 wird in Relation zu den Instrumentenspezifikationen gestellt, um sicher zu gehen, dass kein Abgas rückwärts gezogen wird. Wird an der Instrumentierung nichts geändert, muss auch dieser Fluss konstant sein.

Das von der Pumpe 16 gezogene Abgas gelangt zuerst durch ein Filter 12, dann durch eine Kühlschlange 13 zum Massendurchflussmesser 14. Das Filter hält Verunreinigungen vom Massendurchflussmesser 14 fern, welche bei Start- und Ausschaltvorgängen beim Cyclone 9 nicht abgeschieden werden. In der Kühlschlange 13 wird die Abgastemperatur von 60°C auf Raumtemperatur gesenkt. Zwischen Massendurchflussmesser 14 und Pumpe 16 befindet sich ein Ausgleichsgefäß 15 mit einem Volumen von 2 Litern. Es dient dazu, den von der Pumpe 16 erzeugten oszillierenden Fluss zu glätten, damit der Massendurchflussmesser 14 stabil arbeiten kann. Der Massendurchflussmesser 14 wird per Software so eingestellt, dass sein Fluss zusammen mit dem Instrumentenfluss immer 25 Liter pro Minute ergibt. Die Feineinstellung erfolgt mit Hilfe von P3. Vor den Drucksensoren P3 und P4 ist je ein Ventil zu deren Schutz eingebaut. Insbesondere beim Zurückspülen der Leitungen mit partikelfreier Luft (Anschluss 17) oder beim Betrieb der Pumpe 16 bei abgeschlossener Messleitung können Drücke entstehen, welche den Messbereich dieser Sensoren übersteigen.

Die ganze Anordnung, welche den Anschluss an den Cyclone 9, den zweiten "flow splitter" 10 und die Anschlussleitungen für die Instrumente umfasst, ist mit einem passgenauen Heizkissen 11 umschlossen, welches auf 60°C geregelt ist. Sowohl die Messung der Partikelmassekonzentration wie auch der Partikelanzahlkonzentration und -größenverteilung erfolgen mit verdünntem Abgas. Zur Ermittlung der Ursprungskonzentrationen muss das Verdünnungsverhältnis an der ersten Verdünnungsstufe 3 und nach dem VPR bestimmt werden. Dazu werden CO₂-Messungen des Triebwerksabgases verwendet. Die Ausgangskonzentration von CO₂ wird mit der existierenden Gasanalyse 18 bestimmt, das Verdünnungsverhältnis der ersten Verdünnungsstufe am Ort der Messung der Partikelmasse und das Verdünnungsverhältnis des VPR Systems am Ort der Messung der Partikelanzahl bzw. -grössenverteilung. Deshalb sind in der Systemzeichnung nach den Geräten für Partikelmasse (PM Masse) und -anzahl (PM Anzahl/Grösse) je ein CO₂-Messgerät eingezeichnet. Nach dem VPR System sind die CO₂-Konzentrationen aus dem Abgas sehr niedrig (im ppm Bereich). Zur Verbesserung der Genauigkeit der Messung der VPR-Verdünnung kann vor und nach einer Messung eines Triebwerks an Stelle des Stickstoffs als Verdünnungsluft (Position 4) reines CO₂-Gas verwendet werden. Wird das Absperrventil 1a vor dem "ejector dilutor" geschlossen, kriegen die Instrumente reines CO₂ und die CO₂-Konzentrationen erreichen nach dem VPR immerhin einige Tausend ppm.

Je nach Anzahl der Instrumente zur Partikelmessung kann ein zweiter Stromteiler 10 mit einer anderen Anzahl von parallelen Strömungspfaden vorgesehen sein, oder es kann ein Strömungspfad verschlossen sein. Das gleich gilt für den ersten Stromteiler 1, wenn z.B. keine Gasanalyse 18 vorgesehen ist.

Alle Sensorik und Regelung wird in einem zentralen Datenerfassungssystem 22 zusammengefasst.

## Patentansprüche

1. Verfahren für die Messung von Partikelemissionen an Flugzeugtriebwerken in Prüfständen **dadurch gekennzeichnet, dass** der Eingang eines ersten Stromteilers (1) mit einer Sonde (B) zur Entnahme von Abgas des Flugzeugtriebwerkes verbunden wird, der Abgasstrom mittels dem ersten Stromteiler (1) in eine Partikelleitung (8) und in eine mit einem Abblasventil (20) verbundene Leitung (2a) aufgeteilt wird, **dass** mittels eines Drucksensors (P1) ein vorgegebener Überdruck vor dem ersten Stromteiler (1) eingestellt wird, **dass** die Partikelleitung (8) mit dem Eingang einer ersten Verdünnungsstufe (3) verbunden wird, in welcher das Abgas in einem bestimmten Verhältnis verdünnt wird **und dass** überzähliges Volumen über einen Auspuff mit einem Ventil (3a) an der ersten Verdünnungsstufe (3) entweicht, **weiters dass** der Ausgang der ersten Verdünnungsstufe (3) mit dem Eingang eines zweiten Stromteilers (10) verbunden wird, **dass** ein Ausgang des zweiten Stromteilers (10) mit einem Instrument zur Partikelmessung verbunden wird **und dass** zur Einstellung eines vorgegebenen Durchflusses durch die Partikelleitung (8) ein anderer Ausgang des zweiten Stromteilers (10) mit einer Pumpe (16) verbunden wird.

2. Verfahren nach Anspruch 1, **dadurch gekennzeichnet, dass** der Abgasstrom mittels dem ersten Stromteiler (1) zur Schadstoffanalyse (18) zusätzlich in eine weitere Abgasleitung (2b) aufgeteilt wird.

3. Verfahren nach Anspruch 1 oder 2, **dadurch gekennzeichnet, dass** eine automatische Druckregelung für den Eingangsdruck an der ersten Verdünnungsstufe (3) geschieht.

4. Verfahren nach einem der vorhergehenden Ansprüche, **dadurch gekennzeichnet, dass** ein Temperatursensor (5) zwischen Ausgang der ersten Verdünnungsstufe (3) und Eingang der nachfolgenden Partikelleitung (8) platziert wird, zur Regelung der Temperatur der Verdünnungsluft ohne Temperatursprung zwischen dem verdünnten Abgas und der angehängten Partikelleitung (8).

5. Verfahren nach einem der vorhergehenden Ansprüche, **dadurch gekennzeichnet, dass** eine kurze Verweilzeit in der Partikelleitung (8) erzeugt wird, durch Verwendung eines "Ejector Dilutors", welcher einen hohen Volumenstrom zur Verfügung stellt und einer Pumpe (16), welche parallel zu den Instrumenten zieht.

6. Verfahren nach einem der vorhergehenden Ansprüche, **dadurch gekennzeichnet, dass** der totale Volumenflusses in der Partikelleitung (8) auf einen konstanten Wert stabilisiert wird, durch einen Massendurchflussmesser (14) mit Dämpfungsvolumen, einen Drucksensor (P3) vor dem Abscheider (9) für grobe Partikel und einen Drucksensor vor dem Massendurchflussmesser (14).

7. Verfahren nach einem der vorhergehenden Ansprüche, **dadurch gekennzeichnet, dass** temperaturgeregelte Heizkissen (6, 7, 11) verwendet werden, welche an die verwendeten Komponenten eng angepasst sind.

8. Vorrichtung für die Messung von Partikelemissionen an Flugzeugtriebwerken in Prüfständen, **dadurch gekennzeichnet, dass** ein erster Stromteiler (1) vorgesehen ist, dessen Eingang mit einer Sonde (B) zur Entnahme von Abgas des Flugzeugtriebwerkes verbunden ist und der den Abgasstrom in eine Partikelleitung (8) und in eine mit einem Abblasventil (20) verbundene Leitung (2a) aufteilt und vor dem Eingang des ersten Stromteilers (1) ein Drucksensor (P1) vorgesehen ist, mittels dem ein vorgegebener Überdruck vor dem ersten Stromteiler (1) eingestellt wird, **dass** die Partikelleitung (8) vom ersten Stromteiler (1) mit dem Eingang einer ersten Verdünnungsstufe (3) verbunden ist, in der das Abgas in einem bestimmten Verhältnis verdünnt wird, der Ausgang der ersten Verdünnungsstufe (3) mit dem Eingang eines zweiten Stromteilers (10) verbunden ist und an der ersten Verdünnungsstufe (3) ein Auspuff mit einem Ventil (3a) vorgesehen ist **und dass** ein Ausgang des zweiten Stromteilers (10) mit einem Instrument zur Partikelmessung verbunden ist und ein anderer Ausgang des zweiten Stromteilers (10) mit einer Pumpe (16) zur Einstellung eines vorgegebenen Durchflusses durch die Partikelleitung (8) verbunden ist.

9. Vorrichtung nach Anspruch 8, **dadurch gekennzeichnet, dass** vor dem Eingang des zweiten Stromteilers (10) ein Abscheider (9) angeordnet ist.

10. Vorrichtung nach Anspruch 8, **dadurch gekennzeichnet, dass** vor der Pumpe (16) ein Ausdehngefäß (15) angeordnet ist.

11. Vorrichtung nach Anspruch 8 oder 10, **dadurch gekennzeichnet, dass** vor der Pumpe (16) zumindest ein Massendurchflussmesser (14) angeordnet ist.

12. Vorrichtung nach Anspruch 8, 10 oder 11, **dadurch gekennzeichnet, dass** vor der Pumpe (16) eine Kühlschlange (113) angeordnet ist.

13. Vorrichtung nach Anspruch 8, 10, 11 oder 12, **dadurch gekennzeichnet, dass** vor der Pumpe (16) ein Filter (12) angeordnet ist.

14. Vorrichtung nach einem der Ansprüche 8 bis 13, **dadurch gekennzeichnet, dass** in der Partikelleitung (8) zumindest ein Drucksensor (P3) vorgesehen ist.

15. Vorrichtung nach einem der Ansprüche 8 bis 14, **dadurch gekennzeichnet, dass** zumindest am ersten Stromteiler (1) und/oder am zweiten Stromteiler (10) und/oder an der ersten Verdünnungsstufe (3) ein Heizkissen (6, 7, 11) angeordnet ist.

16. Vorrichtung nach einem der Ansprüche 8 bis 15, **dadurch gekennzeichnet, dass** ein Stromteiler (1, 10) einen Eingangsabschnitt (G) und drei Ausgangsabschnitte (D, E, F) umfasst, wobei die Längsachse (E1) des mittleren Ausgangsabschnittes (E) mit der Längsachse (G1) des Eingangsabschnitt (G) zusammenfällt und die Längsachsen (D1, F1) der beiden anderen Ausgangsabschnitte (D, F) zur Längsachse (E1) des mittleren Ausgangsabschnittes (E) geneigt angeordnet sind.

## Claims

1. A method for measuring particulate emissions of aircraft engines on test benches, **characterized in that** the inlet of a first flow splitter (1) is connected to a probe (B) for withdrawing exhaust gas of the aircraft engine, the exhaust gas flow is split by way of the first flow splitter (1) into a particle line (8) and a line (2a) connected to a blow-off valve (20), **that** a pressure sensor (P1) is used to set a predefined overpressure upstream of the first flow splitter (1), **that** the particulate line (8) is connected to the inlet of a first dilution stage (3) in which the exhaust gas is diluted at a certain ratio, **and that** excess volume escapes on the first dilution stage (3) via an exhaust having a valve (3a), **furthermore that** the outlet of the first dilution stage (3) is connected to the inlet of a second flow splitter (10), **that** an outlet of the second flow splitter (10) is connected to an instrument for particulate measurement, **and that** another outlet of the second flow splitter (10) is connected to a pump (16) for setting a predefined flow through the particulate line (8).

2. The method according to claim 1, **characterized in that** the exhaust gas flow is additionally split into a further exhaust gas line (2b) by way of the first flow splitter (1) for pollutant analysis (18).

3. The method according to claim 1 or 2, **characterized in that** the pressure for the inlet pressure at the first dilution stage (3) is controlled automatically.

4. A method according to any one of the preceding claims, **characterized in that** a temperature sensor (5) is positioned between the outlet of the first dilution stage (3) and the inlet of the following particle line (8) for regulation of the temperature of the dilution air without a temperature step between the diluted exhaust gas and the attached particle line (8).

5. A method according to any one of the preceding claims, **characterized in that** a short residence time is generated in the particle line (8) by using an ejector dilutor, which provides a high volume flow, and a pump (16), which draws samples simultaneously with the instruments.

6. A method according to any one of the preceding claims, **characterized in that** the total volume flow in the particle line (8) is stabilized to a constant value by means of a mass flow meter (14) with a damping volume, a pressure sensor (P3) upstream of the separator (9) for coarse particles and a pressure sensor upstream of the mass flow meter (14).

7. A method according to any one of the preceding claims, **characterized in that** temperature-controlled heating pads (6, 7, 11) are used, which are closely matched to the components that are used.

8. A device for measuring particulate emissions of aircraft engines on test benches, **characterized in that** a first flow splitter (1) is provided, the inlet of which is connected to a probe (B) for withdrawing exhaust gas of the aircraft engine and which splits the exhaust gas flow into a particle line (8) and a line (2a) connected to a blow-off valve (20), and a pressure sensor (P1) is provided upstream of the inlet of the first flow splitter (1), the pressure sensor being used to set a predefined overpressure upstream of the first flow splitter (1), **that** the particulate line (8) from the first flow splitter (1) is connected to the inlet of a first dilution stage (3) in which the exhaust gas is diluted at a certain ratio, the outlet of the first dilution stage (3) is connected to the inlet of a second flow splitter (10), and an exhaust having a valve (3a) is provided on the first dilution stage (3), **and that** an outlet of the second flow splitter (10) is connected to an instrument for particulate measurement, and another outlet of the second flow splitter (10) is connected to a pump (16) for setting a predefined flow through the particulate line (8).

9. The device according to claim 8, **characterized in that** a separator (9) is arranged upstream of the inlet of the second flow splitter (10).

10. The device according to claim 8, **characterized in that** an expansion vessel (15) is arranged upstream of the pump (16).

11. The device according to claim 8 or 10, **characterized in that** at least one mass flow meter (14) is arranged upstream of the pump (16).

12. The device according to claim 8, 10 or 11, **characterized in that** a cooling coil (13) is arranged upstream of the pump (16).

13. The device according to claim 8, 10, 11 or 12, **characterized in that** a filter (12) is arranged upstream of the pump (16).

14. A device according to any one of claims 8 to 13, **characterized in that** at least one pressure sensor (P3) is provided in the particle line (8).

15. A device according to any one of claims 8 to 14, **characterized in that** a heating pad (6, 7, 11) is arranged at least at the first flow splitter (1) and/or at the second flow splitter (10) and/or at the first dilution stage (3).

16. A device according to any one of claims 8 to 15, **characterized in that** a flow splitter (1, 10) comprises an inlet section (G) and three outlet sections (D, E, F), wherein the longitudinal axis (E1) of the middle outlet section (E) coincides with the longitudinal axis (G1) of the inlet section (G), and the longitudinal axes (D1, F1) of the two other outlet sections (D, F) are inclined with respect to the longitudinal axis (E1) of the middle outlet section (E).

## Revendications

1. Procédé de mesure d'émissions de particules au niveau de réacteurs d'avions dans des bancs d'essai, **caractérisé en ce que** l'entrée d'un premier diviseur de flux (1) est raccorde à une sonde (B) pour le prélèvement de gaz d'échappement du réacteur d'avion, que le flux de gaz d'échappement est divisé au moyen du premier diviseur de flux (1} en une conduite à particules (8) et une conduite (2a) raccordée à une soupape d'échappement (20), que, au moyen d'un capteur de pression (P1), une surpression prédéfinie est réglée en amont du premier diviseur de flux (1), que la conduite à particules (8) est raccordée à l'entrée d'un premier niveau de dilution (3) dans lequel le gaz d'échappement est dilué avec un certain rapport et que le volume excédentaire s'échappe par un échappement doté d'une soupape (3a) au niveau du premier niveau de dilution (3), que la sortie du premier niveau de dilution (3) est en outre raccordée à l'entrée d'un second diviseur de flux (10), qu'une sortie du second diviseur de flux (10) est raccordée un instrument de mesure de particules, et que, pour régler un débit prédéfini dans la conduite à particules (8), une autre sortie du second diviseur de flux (10) est raccordée à une pompe (16).

2. Procédé selon la revendication 1, **caractérisé en ce que** le flux de gaz d'échappement est divisé en plus au moyen du premier diviseur de flux (1), pour l'analyse des polluants (18), en une autre conduite de gaz d'échappement (2b).

3. Procédé selon la revendication 1 ou 2, **caractérisé en ce qu'**il se produit un réglage automatique de pression pour la pression d'entrée au niveau du premier niveau de dilution (3).

4. Procédé selon une des revendications précédentes, **caractérisé en ce qu'**un capteur de température (5) est placé entre la sortie du premier niveau de dilution (3) et l'entrée de la conduite à particules suivante (8) pour régler la température de l'air de dilution sans saut de température entre le gaz d'échappement dilué et la conduite à particules suspendue (8).

5. Procédé selon une des revendications précédentes, qu'un bref temps d'attente est créé dans la conduite à particules (8) en utilisant un « dilueur éjecteur » qui met à disposition un débit volumique élevé et d'une pompe (16) qui pompe parallèlement aux instruments.

6. Procédé selon une des revendications précédentes, **caractérisé en ce que** le débit volumique total dans la conduite à particules (8) est stabilisé à une valeur constante par un mesureur de débit massique (14) avec des volumes d'amortissement, un capteur de pression (P3) en aval du séparateur (9) pour les particules grossières et un capteur de pression en amont du mesureur de débit massique (14).

7. Procédé selon une des revendications précédentes, **caractérisé en ce que** sont utilisés des coussins chauffants à température régulée (6, 7, 11) qui sont étroitement adaptés aux composantes utilisées.

8. Dispositif de mesure d'émissions de particules au niveau de réacteurs d'avions, **caractérisé en ce qu'**il est prévu un premier diviseur de flux (1) dont l'entrée est raccordée à une sonde (B) pour le prélèvement de gaz d'échappement du réacteur d'avion et qui divise le flux de gaz d'échappement en une conduite à particules (8) et une conduite (2a) raccordée à une soupape d'échappement (20) et qu'il est prévu, en amont de l'entrée du premier diviseur de flux (1), un capteur de pression (P1) au moyen duquel une surpression prédéfinie est réglée en amont du premier diviseur de flux (1), que la conduite à particules (8) est raccordée par le premier diviseur de flux (1) à l'entrée d'un premier niveau de dilution (3) dans lequel le gaz d'échappement est dilué avec un certain rapport, la sortie du premier niveau de dilution (3) est raccordée à l'entrée d'un second diviseur de flux (10) et qu'il est prévu, au niveau du premier niveau de dilution (3), un échappement avec une soupape (3a) et qu'une sortie du second diviseur de flux (10) est raccordée à un instrument de mesure de particules et une autre sortie du second diviseur de flux (10) est raccordée à une pompe (16) pour le réglage d'un débit prédéfini dans la conduite à particules (8).

9. Dispositif selon la revendication 8, **caractérisé en ce que**, en amont de l'entrée du second diviseur de flux (10), est disposé un séparateur (9).

10. Dispositif selon la revendication 8, **caractérisé en ce que**, en amont de la pompe (16), est disposé un vase d'expansion (15).

11. Dispositif selon la revendication 8 ou 10, **caractérisé en ce que**, en amont de la pompe (16), est disposé au moins un mesureur de débit massique (14).

12. Dispositif selon la revendication 8, 10 ou 11, **caractérisé en ce que**, en amont de la pompe (16), est disposé un serpentin réfrigérant (113).

13. Dispositif selon la revendication 8, 10, 11 ou 12, **caractérisé en ce que**, en amont de la pompe (16), est disposé un filtre (12).

14. Dispositif selon une des revendications 8 à 13, **caractérisé en ce que**, dans la conduite à particules (8), il est prévu au moins un capteur de pression (P3).

15. Dispositif selon une des revendications 8 à 14, **caractérisé en ce que**, au moins au niveau du premier diviseur de flux (1) et/ou du second diviseur de flux (10) et/ou au niveau du premier niveau de dilution (3), est disposé un coussin chauffant (6, 7, 11).

16. Dispositif selon une des revendications 8 à 15, **caractérisé en ce qu'**un diviseur de flux (1,10 comprend une section d'entrée (G) et trois sections de sortie (D, E, F), l'axe longitudinal (E1) de la section de sortie centrale (E) coïncidant avec l'axe longitudinal (G1) de la section d'entrée (G) et l'axe longitudinal (D1, F1) des deux autres sections de sortie (D, F) étant disposé incliné vers l'axe longitudinal (E1) de la section de sortie centrale (E).
